# DEMANDE DE BREVET EUROPEEN

(11) **EP 0 869 136 A1**
(43) Date de publication de la demande: **07.10.1998**
(21) Numéro de dépôt: 98400660.1
(22) Date de dépôt: 20.03.1998
(51) Int. Cl.: C08F 2/32

(54) **Nouveaux polymères associatifs et leur procédé de préparation par micro-émulsion inverse**

(30) Priorité: 04.04.1997 FR 9704144
(71) Demandeur: ELF ATOCHEM S.A., 92800 Puteaux, Hauts-de-Seine (FR)
(72) Inventeur: Mallo, Paul, 78400 Chatou (FR); Candau, François, 67000 Strasbourg (FR); Corpart, Jean-Marc, 95110 Sannois (FR); Pabon, Martial, 92400 Courbevoie (FR); Collette, Christian, 75005 Paris (FR); Selb, Joseph, 67270 Kienheim (FR)

(57) **Abrégé**

L'invention concerne les polymères associatifs acryliques ainsi que leur procédé de synthèse par polymérisation radicalaire en micro-émulsion inverse. Cette technique a l'avantage de fournir une dispersion stable de microlatex transparents ou translucides de haut poids moléculaire et de diamètre inférieur à 100 nm.

Les polymères associatifs de l'invention sont utilisés comme épaississants des solutions aqueuses.

## Description

La présente invention concerne des nouveaux polymères associatifs destinés à augmenter la viscosité des solutions aqueuses, leur procédé de synthèse ainsi que les solutions aqueuses contenant ces polymères.

Les polymères hydrosolubles viscosifiants sont utilisés dans différents domaines tels que les peintures, les colles et adhésifs, le bâtiment, le textile.

Les compositions aqueuses et/ou pigmentées auxquelles a souvent à faire l'homme de l'art, en particulier les peintures aqueuses, sont constituées d'une phase liquide qui peut être de l'eau ou un mélange d'eau avec un solvant organique miscible à l'eau, d'un polymère dispersé dans la phase liquide, nommé couramment "liant", de charges et/ou de pigments, d'un agent dispersant des charges et/ou pigments qui peut être un polymère hydrosoluble, ainsi que de divers adjuvants tels qu'agents de coalescence, biocides, antimousses ou autres, enfin d'un ou plusieurs agents viscosifiants (ou épaississants) qui sont des polymères naturels ou de synthèse.

En général les polymères augmentent la viscosité des solutions dans lesquelles ils sont dissous. Les polymères hydrosolubles généralement utilisés comme viscosifiants de solutions aqueuses ont des structures variées ; on peut citer les polyacrylamides, éventuellement partiellement hydrolysés, les poly(meth)acrylates de sodium et leurs copolymères, les dérivés de la cellulose, ou encore les polysaccharides.

Cependant, l'utilisation des polymères hydrosolubles conventionnels reste limitée. En effet, pour avoir des bonnes propriétés viscosifiantes le polymère hydrosoluble doit avoir une masse moléculaire élevée. Mais la plupart des applications industrielles citées précédemment imposent de soumettre la solution aqueuse contenant le polymère viscosifiant à un fort gradient de cisaillement. Ceci cause souvent la dégradation du polymère entraînant la réduction de sa masse moléculaire et la diminution de son pouvoir viscosifiant.

Certes, les polymères de faible masse sont moins sensibles aux sollicitations mécaniques mais ils doivent être utilisés en forte concentration ce qui est incompatible avec les applications industrielles.

Les polymères naturels comme les dérivés de la cellulose sont quant à eux sensibles aux attaques microbiennes et nécessitent l'ajout d'agents antimicrobiens.

Pour améliorer les performances des polymères hydrosolubles, on a développé des polymères associatifs qui selon la définition qu'en donne l'Encyclopedia of Polymer Science and Engineering, 2nd edition 17, 772-779 sont des polymères hydrosolubles contenant des groupements non polaires qui se rassemblent en agrégats dans les milieux polaires. Ils sont constitués d'un squelette comportant majoritairement des motifs à caractère hydrophile et de façon minoritaire des séquences hydrophobes. De telles structures mises en solutions aqueuses voient leurs pôles hydrophobes se regrouper afin de limiter les interactions eau/séquences hydrophobes. La formation de tels noeuds de réticulation physique peut aboutir à la création d'un véritable réseau. Le gel physique ainsi formé augmente considérablement la viscosité de l'eau. Dans le cas d'une composition aqueuse chargée et/ou pigmentée, les polymères associatifs agissent également par la création de liens divers entre eux-mêmes et certains constituants des compositions. Ils apportent alors aux compositions chargées et/ou pigmentées dans lesquelles ils sont ajoutés un comportement rhéologique moins pseudo-plastique et donc facilitant les applications.

Parmi les polymères associatifs, les épaississants associatifs polyuréthannes et les épaississants associatifs acryliques sont particulièrement connus.

Les agents associatifs polyuréthannes sont des copolymères à structure essentiellement tribloc, c'est-à-dire des molécules constituées de trois parties distinctes, la partie centrale hydrophile polymérisée et deux extrémités identiques ou non, constituées de groupements hydrophobes tels que, par exemple, les groupements alkyles, aryles, alkylaryles. De tels agents sont décrits dans de nombreux brevets comme par exemple dans les brevets US 3,770,684 ; US 4,079,028 et US 4,155,892.

Les agents associatifs acryliques ont une structure différente basée sur une chaîne principale à caractère hydrophile le long de laquelle sont distribués de façon statistique des motifs hydrophobes pendants. Ils sont le plus souvent obtenus par polymérisation en émulsion dans l'eau.

Les polyacryliques associatifs ne développent leur pouvoir épaississant ou viscosifiant qu'en milieu alcalin. De plus, compte tenu de leur condition de synthèse ils ne présentent pas de propriétés rhéologiques à effet seuil car leur masse moléculaire n'est pas assez élevée. Pour obtenir des polymères acryliques de haute masse moléculaire, la polymérisation en émulsion inverse est une méthode de choix bien connue de l'homme de l'art puisqu'elle allie une vitesse de réaction élevée à l'obtention de masses moléculaires supérieures à 1 million. La polymérisation en émulsion inverse est aujourd'hui très employée au niveau industriel.

Elle a été utilisée également mais de manière beaucoup plus discrète pour la synthèse de (co)polymères acryliques associatifs. On peut citer à titre d'exemple le brevet US 4 921 903 qui enseigne l'art de synthétiser des terpolymères associatifs par polymérisation en émulsion inverse, mais en deux étapes. En pratique le groupement hydrophobe est incorporé par transamidation d'un copolymère hydrophile contenant des motifs monomère amide.

Le brevet US 4 918 123 enseigne la manière d'introduire de l'octylacrylamide en tant que monomère hydrophobe dans une émulsion eau/huile contenant des motifs dérivés d'un monomère non ionique tel que l'acrylamide et d'un monomère cationique tel que le chlorure de 3 méthacrylamido propyl triméthyl ammonium. Cette incorporation se fait à l'aide d'un tiers solvant alcool et en utilisant un inhibiteur de polymérisation soluble dans la phase huile afin de prévenir toute polymérisation du monomère hydrophobe dans la phase huile. Bien souvent l'utilisation d'un alcool n'est pas souhaitable pour l'application finale.

Comme on peut l'observer à la lecture de l'art antérieur, l'obtention par la technique de polymérisation en émulsion inverse de polymère associatif acrylique de haute masse moléculaire n'est pas chose aisée. Les procédés décrits sont peu industriels, nécessitent l'utilisation d'additif co-solvant dont la présence est quelquefois une gêne pour l'utilisateur final ou requièrent la préparation de tensioactifs particuliers destinés uniquement à cet usage (EP 172 015 et EP 172 724), ce qui a pour conséquence d'augmenter le prix de ce type de produit. De plus, compte tenu de la difficulté à optimiser la stabilité finale ainsi que son aptitude à l'inversion, il est très complexe de modifier les paramètres de polymérisation pour les adapter à de nouveaux besoins en propriétés finales du polymère.

Tout ceci s'ajoute aux inconvénients classiques de l'émulsion inverse, c'est-à-dire le manque de stabilité dans le temps et la large distribution des tailles de particules.

On a maintenant trouvé que les problèmes cités précédemment tels que la non stabilité de l'émulsion ou l'usage d'un solvant peuvent être résolus par la technique de polymérisation en micro-émulsion inverse.

On rappellera qu'une émulsion consiste en un milieu diphasique, turbide, instable. Sous agitation, on observe des particules dispersées dans l'eau ou dans l'huile selon les cas, présentant une large distribution de taille autour d'une moyenne de l'ordre du micromètre. Lors d'une polymérisation en émulsion, le monomère se trouve dispersé dans les grosses gouttelettes de l'émulsion (diamètre : environ 1 à 10 *µ*m) ainsi que dans les petites micelles d'émulsifiant (diamètre environ 5 à 10 nm).

Une microémulsion est également constituée par deux liquides insolubles l'un dans l'autre et un tensioactif, mais contrairement au cas de l'émulsion, le simple mélange des constituants produit, sans aucun apport d'énergie, un milieu transparent ou translucide thermodynamiquement stable.

L'obtention d'une microémulsion inverse nécessite en général la mise en oeuvre de conditions particulières dont les principaux paramètres sont les suivants : concentration en tensioactifs, rapport hydrophile lipophile (H L B) du tensioactif ou du mélange de tensioactifs utilisé, température, nature de la phase organique et composition de la phase aqueuse.

La demanderesse a trouvé et mis au point de nouveaux polymères acryliques associatifs synthétisés par polymérisation en micro-émulsion inverse. L'utilisation de cette technique permet, de façon surprenante, d'incorporer plus facilement et plus simplement, et de manière plus économique, des groupements à caractère hydrophobe dans des squelettes polymériques hydrophiles.

Selon une première forme l'invention consiste à décrire des polymères associatifs obtenus sous forme de micro-latex inverse par polymérisation en micro-émulsion inverse. Une autre forme de l'invention est le procédé de synthèse de ces polymères acryliques associatifs.

Les polymères acryliques associatifs sont préférentiellement des polymères comprenant des motifs dérivés d'un ou de plusieurs monomère(s) éthylénique(s) non ioniques, d'un ou plusieurs monomère(s) anionique(s) et/ou cationique(s) et d'un ou plusieurs monomère(s) portant un groupement hydrophobe et optionellement d'un monomère polyinsaturé.

Au sens de l'invention, un monomère polyinsaturé désigne un monomère comprenant au moins deux doubles liaisons éthyléniques non conjuguées.

Selon une forme avantageuse les polymères associatifs contiennent de 0,1 à 5 % molaire de monomères hydrophobes et de 0 à 0,2 % de monomères polyinsaturés.

Les monomères non ioniques éthyléniques sont choisis préférentiellement parmi l'acrylamide, le méthacrylamide, les NN-dialkylacrylamides, les NN'-alkylacrylamides, le N-vinyl méthacetamide, le N-vinyl méthylformamide, le N-vinyl pyrrolidone et leurs mélanges. L'acrylamide est un choix particulièrement judicieux.

Les monomères anioniques sont choisis préférentiellement parmi l'acide acrylique, l'acide méthacrylique, l'acide 2 acrylamido, 2 méthyl propane sulfonique et leurs sels sodiques, potassiques ou ammoniacaux.

Les monomères cationiques sont choisis préférentiellement parmi l'acrylate de diméthyl amino éthyl (ADAME) et ses sels, le méthacrylate de diméthyl amino éthyl (MADAME) et ses sels, le chlorure de 3-méthacrylamide propyl triméthyl ammonium.

Les monomères portant un groupement hydrophobe sont préférentiellement des monomères éthyléniques contenant un groupement de formule (1) (CH₂-CH₂-O)ₙ-R dans laquelle :
R est un groupe hydrophobe contenant au minimum 8 atomes de carbone, n est un nombre entier supérieur ou égal à 6 et de préférence compris entre 8 et 55.

Un monomère polyinsaturé (au sens donné plus haut) peut être ajouté si l'on souhaite obtenir un polymère acrylique associatif réticulé. Un tel monomère peut contenir au moins deux groupements identiques ou différents, de type acrylique, méthacrylique, vinylique ou allylique et, à titre d'illustration, peut être choisi parmi les dérivés di-acrylamides tels que le méthylène-bis-acrylamide, les di-acrylates tels que le di-acrylate d'éthylène glycol, les composés di-allyliques tels que l'acide diallyl acétique ou le diallyl phtalate.

Le procédé de préparation des microlatex inverses de l'invention est défini d'une manière générale par les étapes suivantes :
(a) on prépare une microémulsion (stable et transparente) de type eau-dans-l'huile en mélangeant :
   (i) une solution aqueuse des monomères à copolymériser avec
   (ii) une phase huileuse ou organique,
   (iii) en présence d'au moins un tensioactif non ionique dont le rapport hydrophile/lipophile (HLB) est de 7 à 13 (dans le cas d'un mélange de tensioactifs, il s'agit du HLB résultant) ;
(b) on soumet la microémulsion inverse obtenue en (a) à des conditions de polymérisation jusqu'à polymérisation complète et obtention d'un microlatex inverse stable, transparent et de haut poids moléculaire (par transparent on entend également translucide).

Dans les formulations des micro émulsions inverses conduisant au micro latex de l'invention, la phase aqueuse contient les monomères hydrosolubles précédemment décrits ; la teneur en monomères dans la phase aqueuse est en général de 20 à 80 % et plus particulièrement de 30 à 70 % en poids.

La phase organique peut consister en un hydrocarbure ou en un mélange d'hydrocarbures. Parmi ceux-ci, les hydrocarbures ou les mélanges d'hydrocarbures isoparaffiniques sont les mieux adaptés pour obtenir des formulations contenant les plus faibles teneurs en tensioactifs et donc les plus économiques.

Le rapport pondéral des quantités de phase aqueuse et de phase organique est choisi le plus élevé possible, de façon à obtenir, après polymérisation, un micro-latex possédant une teneur élevée en polymère. Dans la pratique, ce rapport peut aller par exemple de 0,5 à 3 ; il est le plus souvent voisin de 1. Par ailleurs, le choix du ou des tensioactifs(s) est gouverné par la nécessité de se trouver dans une gamme de HLB de 7 à 13. En effet, en dehors de ce domaine, l'obtention d'une micro-émulsion inverse est soit impossible, soit nécessite des quantités très importantes de tensioactifs rendant non économique le procédé. Par ailleurs, dans le domaine de HLB ainsi défini, la teneur en tensioactif doit être suffisante pour obtenir une micro émulsion inverse.

Les monomères acryliques présents dans la micro-émulsion inverse décrite ci-dessus sont polymérisés thermiquement ou photochimiquement : la méthode consiste à amorcer la copolymérisation photochimiquement, par exemple par irradiation ultra violette, ou thermiquement à l'aide d'un générateur de radicaux libres tels que l'azobisisobutyronitrile ou le persulfate de sodium ou encore à l'aide d'un couple oxydo-réducteur tel que l'hydroperoxyde de butyle/métabisulfite de sodium ou encore l'hydroperoxyde de cumène/chlorure de thionyle.

Selon une forme avantageuse le procédé de synthèse de polymères associatifs de l'invention consiste en la polymérisation en micro-émulsion inverse d'un mélange contenant :
- de 90 à 99,9 % molaire et de préférence de 95 à 99,5 % d'au moins un monomère choisi dans le groupe constitué de monomères éthyléniques non ioniques et de monomères anioniques et/ou cationiques.
- de 0,1 à 10 % molaire et de préférence de 0,1 à 5 % d'au moins un monomère portant un groupe hydrophobe
- de 0 à 0,2 % molaire d'au moins un monomère polyinsaturé en présence d'un tensioactif de HLB compris entre 7 et 13.

La polymérisation s'effectue très rapidement et conduit à la formation de micro-latex stables et transparents dont le diamètre des particules est inférieur à 100 nm et de préférence de 30 à 80 nm avec une distribution de taille étroite.

La valeur du diamètre des particules et la distribution en taille sont obtenues par diffusion quasi-élastique de la lumière. Les micro-latex inverses, contenant les polymères acryliques associatifs de haute masse moléculaire, obtenus selon le procédé de l'invention sont utilisables dans de nombreuses applications, notamment en tant qu'épaississant pour l'industrie textile, la peinture, les sauces de couchage du papier, en tant que floculant pour la floculation et la déshydratation des boues ou en tant qu'agent de rétention pour l'industrie papetière.

Les exemples suivants illustrent l'invention sans la limiter.

### Exemple 1

a - Préparation de la phase aqueuse :
   On mélange dans un bêcher et sous agitation : 92,7 g d'eau bi-permutée ; 20,7 g d'acide acrylique glacial ; 26 g d'une solution aqueuse d'hydroxyde de sodium (introduit lentement) ; 124,1 g d'acrylamide et 27,7 g d'une solution aqueuse de méthacrylate d'octyl phénol oxyéthyléné dans lequel n de la formule (1) est égal à 35.
b - Préparation de la phase huile
   On mélange dans un bêcher : 322 g d'un hydrocarbure isoparaffinique (l'Isopar M) ; 32 g de sesquioléate de sorbitan et 24 g d'héxaoléate de sorbitan oxyéthyléné dans lequel n de la formule (1) est égal à 50.
c- Préparation des solutions d'amorceurs :
   c-1 : oxydant
      On mélange 2,5 g d'hydroperoxyde de t-butyle et 40 g d'eau.
   c-2 : réducteur
      On dissout 1,0 g de métabisulfite de sodium dans 40 g d'eau.
d - Préparation de la micro-émulsion :
   Les phases aqueuse et organique sont mélangées sous agitation et soumises à un cisaillement important à l'aide d'un appareil de type ultra-turrax pendant 5 minutes.
   On obtient à la fin de cette étape une micro-émulsion que l'on place dans un réacteur de polymérisation équipé d'un agitateur, d'un dispositif d'introduction d'azote par barbotage et d'un dispositif permettant l'introduction à débit très faible de réactif.
   La micro-émulsion est ainsi soumise à un balayage d'azote pendant environ 30 minutes.
e - Polymérisation :
   1 ml de la solution oxydante est introduit dans le réacteur.
   Après un temps d'attente d'environ 5 minutes, 2 ml de la solution réductrice sont introduits dans le milieu réactionnel en 15 minutes.
   La réaction démarre instantanément et on laisse la température s'élever dans le réacteur.
   On obtient en fin de synthèse un micro-latex translucide de diamètre compris entre 30 et 80 nm.
f - Caractéristiques :
   Le polymère synthétisé précédemment est récupéré sous forme de poudre par précipitation. Sa viscosité dans l'eau a été évaluée à l'aide d'un rhéomètre Haake RS 100 et extrapolée à gradient nul.
   A 0,1 % de polymère dans l'eau, la viscosité est de 100 Pa.s.

### Exemple 2:

a - Préparation de la phase aqueuse :
   On mélange dans un bêcher et sous agitation : 154,4 g d'eau bi-permutée ; 25,4 g d'acide acrylique glacial ; 28,4 g d'une solution aqueuse d'hydroxyde de sodium (introduit lentement) ; 133,8 g d'acrylamide et 28,0 g d'une solution aqueuse de méthacrylate d'octyl phénol oxyéthyléné dans lequel n de la formule (1) est égal à 10.
b - Préparation de la phase organique
   On mélange dans un bêcher 292 g d'un hydrocarbure isoparaffinique (l'Isopar M) ; 26,9 g de sesquioléate de sorbitan et 29 g d'héxaoléate de sorbitan oxyéthyléné dans lequel n de la formule (1) est égal à 50.
c - Préparation des solutions d'amorceurs :
   c-3: oxydant
      On mélange 1,4 g d'hydroperoxyde de cumène et 20 g d'lsopar M.
   c-4 : réducteur
      On dissout 1,3 g de chlorure de thionyle dans 20 g d'lsopar M.
d - Préparation de la micro-émulsion
   Les phases aqueuse et organique sont mélangées sous agitation et soumises à un cisaillement important à l'aide d'un appareil de type ultra-turrax pendant 5 minutes.
   On obtient à la fin de cette étape une micro-émulsion que l'on place dans un réacteur de polymérisation équipé d'un agitateur, d'un dispositif d'introduction d'azote par barbotage, et d'un dispositif permettant l'introduction à débit très faible de réactif.
   La micro-émulsion est ainsi soumise à un balayage d'azote pendant environ 30 minutes.
e - Polymérisation
   1 ml de la solution oxydante est introduit dans le réacteur.
   Après un temps d'attente d'environ 5 minutes, 2,8 ml de la solution réductrice sont introduits dans le milieu réactionnel en 15 minutes.
   La réaction démarre instantanément et on laisse la température s'élever dans le réacteur.
   On obtient en fin de synthèse un micro-latex translucide de diamètre de particules compris entre 30 et 80 nm.
f - Caractéristiques
   Le polymère synthétisé précédemment est récupéré sous forme de poudre par précipitation. Sa viscosité dans l'eau a été évaluée à l'aide d'un rhéomètre Haake RS 100 et extrapolée à gradient nul.
   A 0,1 % de polymère dans l'eau, la viscosité est de 50 Pa.s.

### Exemple 3:

a - Préparation de la phase aqueuse :
   On mélange dans un bêcher et sous agitation : 20,3 g d'eau bi-permutée ; 3,37 g d'acide acrylique glacial ; 3,77 g d'une solution aqueuse d'hydroxyde de sodium (introduit lentement) ; 17,5 g d'acrylamide et 1,05 g d'une solution aqueuse de méthacrylate d'octyl phénol oxyéthyléné dans lequel n de la formule (1) est égal à 10.
b - Préparation de la phase huile
   On mélange dans un bêcher 45,9 g d'un hydrocarbure isoparaffinique (L'lsopar M) ; 3,6 g de sesquioléate de sorbitan et 4,3 g d'hexaoléate de sorbitan oxyéthyléné dans lequel n de la formule (1) est égal à 50 et 0,1 g d'azobisisobutyronitrile (AIBN).
c - Préparation de la micro-émulsion :
   Les deux phases précédentes sont mélangées sous agitation et on obtient à la fin de cette phase une micro-émulsion.
   Cette micro-émulsion est alors soumise dans le type d'équipement précédemment décrit à un balayage d'azote pendant environ 15 minutes.
d - Polymérisation
   La micro-émulsion précédente est irradiée 30 minutes à l'aide d'une lampe à rayonnement U.V.
   On obtient en fin de synthèse un micro-latex translucide de diamètre de particules compris entre 30 et 80 nm.
e - Caractéristiques
   Le polymère ainsi obtenu est récupéré par précipitation. Sa viscosité extrapolée à gradient nul à 0,1 % est de 100 Pa.s.

### Exemple comparatif 1

Identique à l'exemple 1 mais on remplace le méthacrylate d'octyl phénol oxyéthyléné par l'octyl phénol oxyéthyléné.

Le polymère obtenu présente une viscosité de 1 Pa.s.

### Exemple comparatif 2

Identique à l'exemple 2 mais on remplace le méthacrylate d'octyl phénol oxyéthyléné par l'octyl phénol oxyéthyléné.

Le polymère obtenu présente une viscosité de 1 Pa.s.

### Exemple comparatif 3

Identique à l'exemple 3 mais on remplace le méthacrylate d'octyl phénol oxyéthyléné par l'octyl phénol oxyéthyléné.

Le polymère obtenu présente une viscosité de 1 Pa.s.

## Revendications

1. Polymères acryliques associatifs sous forme de micro-latex inverse de diamètre de particules inférieur à 100 nm et de préférence compris entre 30 et 80 nm contenant des motifs dérivés :
- d'au moins un monomère choisi dans le groupe constitué de monomères éthyléniques neutres anioniques et/ou cationiques
- d'au moins un monomère acrylique
- d'au moins un monomère hydrophobe hydrophobe
- éventuellement d'un monomère polyinsaturé.

2. Polymères acryliques associatifs selon la revendication 1 contenant de 0,1 à 10 % molaire et de préférence de 0,1 à 5 % de motifs dérivés d'un monomère hydrophobe.

3. Polymères acryliques associatifs selon la revendication 1 ou 2 contenant de 0 à 0,2 % molaire de motifs dérivés d'un monomère polyinsaturé.

4. Polymères associatifs selon l'une quelconque des revendications précédentes caractérisés en ce que le monomère hydrophobe est un monomère éthylénique portant un groupement de formule (CH₂-CH₂-O)ₙ-R dans laquelle R désigne un groupe hydrocarboné contenant au moins 8 atomes de carbone
et n un nombre entier supérieur à 6 et de préférence compris entre 8 et 55.

5. Procédé de synthèse de polymères acryliques associatifs de la revendication 1 par polymérisation en micro-émulsion inverse d'un mélange contenant :
- de 90 à 99,9 % molaire et de préférence de 95 à 99,5 % d'au moins un monomère choisi dans le groupe constitué de monomères éthyléniques non ioniques et de monomères anioniques et/ou cationiques
- de 0,1 à 10 % molaire et de préférence de 0,1 à 5 % d'au moins un monomère portant un groupe hydrophobe
- de 0 à 0,2 % molaire d'au moins un monomère polyinsaturé en présence d'un tensioactif de HLB compris entre 7 et 13.

6. Procédé selon la revendication 5 caractérisé en ce que les monomères hydrosolubles représentent de 20 à 80 % en poids et de préférence de 30 à 70 % de la phase aqueuse.

7. Procédé selon la revendication 5 ou 6 caractérisé en ce que le rapport pondéral de phase aqueuse et de phase organique est de 0,5 à 3 et de préference de 0,8 à 1,2.
